Europäisches Patentamt

European Patent Office

Office européen des brevets

(11) Numéro de publication: **0 453 691 A1**

## (12) DEMANDE DE BREVET EUROPEEN

(21) Numéro de dépôt: 90401116.0

(22) Date de dépôt: 25.04.90

(51) Int. Cl.5: **F16L 27/10, F16L 27/073**

(43) Date de publication de la demande:
30.10.91 Bulletin 91/44

(84) Etats contractants désignés:
DE GB NL

(71) Demandeur: **A C C LA JONCHERE**
5, rue des Ateliers
F-60200 Compiegne(FR)

(72) Inventeur: **Doat, Jean**
4, Côte du Pavillon
F-78250 Meulan(FR)

(74) Mandataire: **Boivin, Claude**
9, rue Edouard-Charton
F-78000 Versailles(FR)

(54) **Joint rotulaire.**

(57) Joint rotulaire qui comprend deux embouts de liaison (2a et 2b) qui sont réunis l'un à l'autre par un soufflet métallique (6) et dont chacun porte un anneau (9a ou 9b) ayant sa face extérieure convexe autolubrifiante et en appui glissant contre la face intérieure d'un segment sphérique (3a ou 3b).

Les anneaux (9a et 9b) sont montés libres sur les embouts (2a et 2b) et chacun de ces embouts présente un épaulement ou une collerette (10a ou 10b) empêchant son anneau de se désolidariser de lui, les deux segments sphériques (3a et 3b) étant solidaires l'un de l'autre.

La présente invention concerne un joint rotulaire qui permet le raccordement de deux tuyauteries de diamètres voisins et autorise un débattement angulaire sans axe préférentiel, tout en n'entraînant qu'une faible augmentation de la conduite. Ce joint est du type comprenant deux embouts de liaison qui sont réunis l'un à l'autre par un soufflet métallique et dont chacun porte un anneau ayant sa face extérieure convexe en appui glissant contre la face intérieure d'un segment sphérique, connu par le brevet US 3,219,365 et est caractérisé en ce que les anneaux sont montés libres sur les embouts et en ce que chacun de ces embouts présente un épaulement ou une collerette empêchant son anneau de se désolidariser de lui, les deux segments sphériques étant solidaires l'un de l'autre.

Grâce à cette disposition, lors d'un débattement angulaire, le soufflet se déforme de manière régulière et le centre de rotation reste au centre de gravité; l'angle de débattement peut être important et l'ensemble des deux segments constitue un carter mobile; l'encombrement est faible et les embouts peuvent subir un désalignement selon un centre de rotation commun.

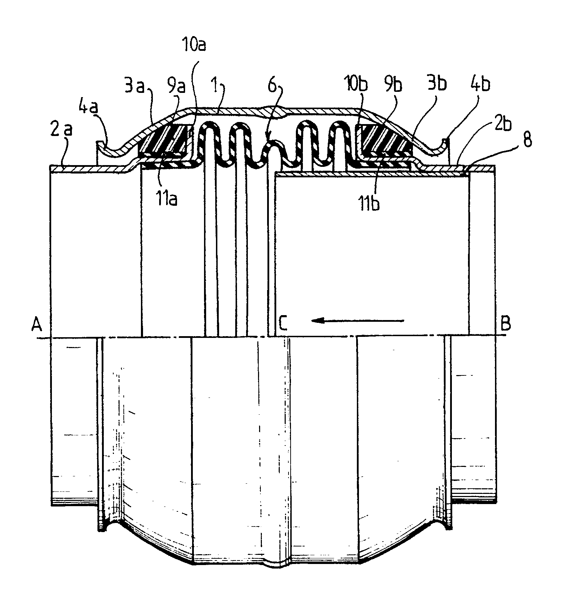

On a décrit ci-après, à titre d'exemple non limitatif, un mode de réalisation du joint rotulaire selon l'invention avec référence à la Figure Unique du dessin annexé qui représente le joint moitié en coupe axiale, moitié en élévation.

Au dessin, on voit les deux embouts 2a et 2b, qui sont identiques et réunis l'un à l'autre par un soufflet métallique 6. Sur chacun des embouts est monté libre un anneau 9a ou 9b dont la surface extérieure est convexe et en appui glissant contre la face intérieure d'un segment sphérique 3a ou 3b, rigidifié par une nervure circulaire 4a ou 4b, les deux segments étant réunis l'un à l'autre par leur grandes bases par l'intermédiaire d'une portion sensiblement cylindrique 1. Les anneaux 9a et 9b sont en une matière auto-lubrifiante, par exemple en graphite ou bien en métal en étant recouvert d'une matière glissante telle que le PFTE, le graphite ou une matière céramique.

Chacun des embouts présente un épaulement 10a ou 10b empêchant l'anneau 9a ou 9b de se désolidariser de l'embout sur lequel il est monté.

Pour absorber les variations de dilatation entre les embouts 2a et 2b et les anneaux 9a et 9b, il est interposé entre l'embout et l'anneau un composite 11a ou 11b graphité souple et élastique. Lorsque les deux embouts 2a et 2b pivotent l'un par rapport à l'autre, leurs axes A et B continuent de passer par les centres de gravité C du joint. Les deux embouts peuvent également se déplacer angulairement l'un par rapport à l'autre.

**Revendications**

1. Joint rotulaire qui comprend deux embouts de liaison (2a et 2b) qui sont réunis l'un à l'autre par un soufflet métallique (6) et dont chacun porte un anneau (9a ou 9b) ayant sa face extérieure convexe autolubrifiante et en appui glissant contre la face intérieure d'un segment sphérique (3a ou 3b), caractérisé en ce que les anneaux (9a et 9b) sont montés libres sur les embouts (2a et 2b) et en ce que chacun de ces embouts présente un épaulement ou une collerette (10a ou 10b) empêchant son anneau de se désolidariser de lui, les deux segments sphériques (3a et 3b) étant solidaires l'un de l'autre.

2. Joint selon la revendication 1, caractérisé en ce que les deux segments (3a et 3b) sont réunis l'un à l'autre par une partie (1) sensiblement cylindrique, l'ensemble formant un carter monobloc.

3. Joint selon la revendication 1 ou 2, caractérisé en ce que des éléments composites (11a et 11b) graphités souples et élastiques sont interposés entre les embouts (2a et 2b) et les anneaux (9a et 9b).

4. Joint rotulaire selon les revendications 1 à 3, caractérisé en ce que l'extrémité de chacun des segments sphériques (3a ou 3b) est rigidifiée par une nervure circulaire (4a ou 4b).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (int. Cl.5) |
|---|---|---|---|
| E | FR-A-2 644 552   (ACC LA JONCHERE)<br>* le document en entier *<br><br>- - - | 1-4 | F 16 L 27/10<br>F 16 L 27/073 |
| X | FR-A-2 625 546   (AAC LA JONCHERE)<br>* le document en entier *<br><br>- - - | 1-2,4 | |
| X,D | US-A-3 219 365   (WEBB)<br>* le document en entier *<br><br>- - - | 1-2,4 | |
| A | US-A-1 434 631   (REYNOLDS)<br>* page 1, ligne 29 - page 2, ligne 6; figure 2 *<br><br>- - - | 1-4 | |
| A | FR-A-2 634 001   (STAINLESS STEEL PRODUCTS)<br>* abrégé; figure 2a *<br><br>- - - | 1-4 | |
| A | EP-A-0 069 034   (CEFILAC)<br>* abrégé *<br><br>- - - - - | 3 | |

### DOMAINES TECHNIQUES RECHERCHES (Int. Cl.5)

F 16 L

Le présent rapport de recherche a été établi pour toutes les revendications

| Lieu de la recherche | Date d'achèvement de la recherche | Examinateur |
|---|---|---|
| La Haye | 13 décembre 90 | NARMINIO A. |